(19) **Europäisches Patentamt**
**European Patent Office**
**Office européen des brevets**

(11) **EP 3 287 821 B1**

(12) **EUROPEAN PATENT SPECIFICATION**

(45) Date of publication and mention
of the grant of the patent:
**27.09.2023 Bulletin 2023/39**

(21) Application number: **15891572.8**

(22) Date of filing: **05.06.2015**

(51) International Patent Classification (IPC):
**G02B 6/12** *(2006.01)*     **G02B 6/122** *(2006.01)*
**G02B 6/30** *(2006.01)*

(52) Cooperative Patent Classification (CPC):
**G02B 6/1228;** G02B 2006/12061;
G02B 2006/12097; G02B 2006/121

(86) International application number:
**PCT/CN2015/080909**

(87) International publication number:
**WO 2016/179869 (17.11.2016 Gazette 2016/46)**

(54) **TAPERED WAVEGUIDE AND SILICON-BASED CHIP**

**VERJÜNGTER WELLENLEITER UND SILICIUMBASIERTER CHIP**

**GUIDE D'ONDES CONIQUE ET PUCE À BASE DE SILICIUM**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2015 PCT/CN2015/078536**

(43) Date of publication of application:
**28.02.2018 Bulletin 2018/09**

(73) Proprietor: **Huawei Technologies Co., Ltd.
Shenzhen, Guangdong 518129 (CN)**

(72) Inventors:
• **ZHAO, Fei
Shenzhen
Guangdong 518129 (CN)**
• **LI, Ming
Shenzhen
Guangdong 518129 (CN)**

(74) Representative: **Pfenning, Meinig & Partner mbB
Patent- und Rechtsanwälte
Theresienhöhe 11a
80339 München (DE)**

(56) References cited:
**WO-A1-2014/208601**    **CN-A- 1 273 471**
**CN-A- 1 564 406**    **CN-A- 1 839 331**
**CN-A- 101 529 292**    **CN-A- 104 051 602**
**CN-A- 104 885 003**    **US-A1- 2006 133 754**
**US-A1- 2008 080 808**    **US-A1- 2015 086 153**
**US-B1- 6 310 995**

• **TOLSTIKHIN V ET AL: "Optically pre-amplified
photodetectors for multi-guide vertical
integration in InP", IEEE INTERNATIONAL
CONFERENCE ON INDIUM
PHOSPHIDE&RELATED MATERIALS, 2009. IPRM
'09, NEWPORT BEACH, CA, USA, IEEE,
PISCATAWAY, NJ, USA, 10 May 2009
(2009-05-10), pages 155-158, XP031467201, ISBN:
978-1-4244-3432-9**

**Description**

**TECHNICAL FIELD**

The present invention relates to the field of communications technologies, and in particular, to a tapered waveguide and a silicon-based chip.

**BACKGROUND**

With development of the Internet, especially emerging of cloud computing, cloud storage, and mobile Internet, higher demands are imposed on a transmission rate and communication quality of a communications network. Existing electric switching cannot meet an increasing demand for a switching capacity any longer because of technical restrictions in backplanes, power consumption, and the like. Due to advantages such as low power consumption and a large capacity, all-optical switching and all-optical signal processing are development directions of broadband communications in the future.

Silicon-based optoelectronics, as a mainstream technology in all-optical signal processing, is used to dispose devices such as a laser, a modulator, a detector, and an optical switch together onto a silicon-on-insulator (SOI) material to form a silicon-based chip. Due to advantages of high bandwidth, low power consumption, and being compatible with an existing CMOS technology, a silicon-based optical chip is a development direction and a key technology of all-optical switching in the future.

A waveguide is a most basic structure in the silicon-based chip, and is configured to connect and form various devices. The waveguide includes a core layer made of a high-refractive-index material and a buried cladding and an upper cladding that are made of low-refractive-index materials. A base of the chip is usually a silicon base.

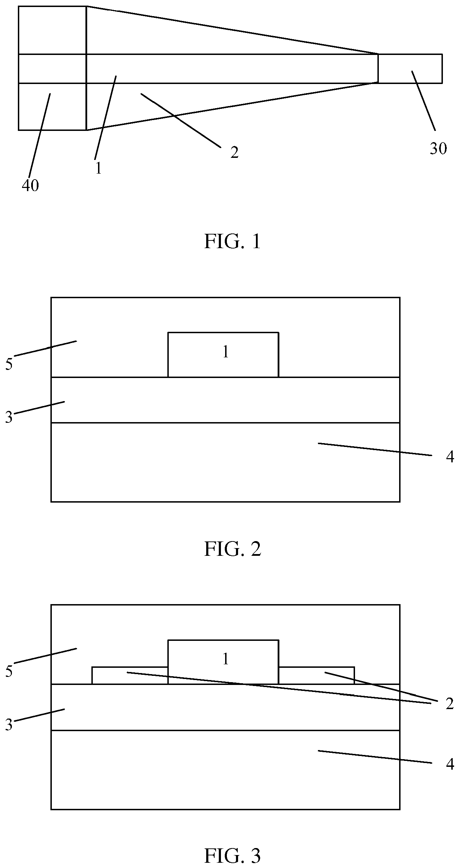

A channel waveguide and a ridge waveguide are two common types of waveguides in a silicon-based chip. The channel waveguide has a channel core section, as shown in FIG. 2, and is mostly used to connect various devices. The ridge waveguide includes a central waveguide 1 with a higher height and shallow-etched strip waveguides 2 with a lower height on both sides, as shown in FIG. 3, and is mostly used in functional devices. The ridge waveguide may be used in an MMI, a DC (directional coupler), a PBS (polarization beam splitter), a PR (polarization rotator), an optical switch, and a modulator (a PN junction waveguide is a ridge waveguide).

A tapered waveguide needs to be used to connect the channel waveguide and the ridge waveguide. Therefore, the tapered waveguide is also a basic device widely used in the silicon-based chip.

An existing tapered waveguide connecting a channel waveguide and a ridge waveguide employs a straight-line structure, that is, a width of the tapered waveguide uniformly increases with a length of the tapered waveguide. A tapered waveguide of a straight-line structure is shown in FIG. 1. The tapered waveguide includes a base 4, a buried cladding 3 disposed on the base 4, a central waveguide 1, shallow-etched strip waveguides 2, and an upper cladding 5 that encloses the central waveguide 1 and the shallow-etched strip waveguides 2. The shallow-etched strip waveguides 2 are symmetrically disposed on both sides of the central waveguide. A width of the tapered waveguide is equal to a sum of widths of the ridge waveguides on both sides and a width of the central waveguide.

For the tapered waveguide of a straight-line structure, the widths of the shallow-etched strip waveguides and a length of the tapered waveguide have a linear relationship, while an effective refractive index of the tapered waveguide and the widths of the shallow-etched strip waveguides do not have a linear relationship. Therefore, the effective refractive index of the tapered waveguide and the length of the tapered waveguide do not have a linear relationship.

For the tapered waveguide employing a straight-line structure, a narrower area (for example, 0 to 0.3 $\mu$m) of the shallow-etched strip waveguide accounts for a smaller portion of the overall length, but its corresponding effective refractive index changes greatly, resulting in a relatively large insertion loss. A wider area (for example, 0.3 to 1 $\mu$m) of the shallow-etched strip waveguide accounts for a larger portion of the overall length, but the effective refractive index does not change greatly, so that the insertion loss of the device cannot be reduced but the length of the device is increased.

Disadvantage 1: A narrower area of a shallow-etched strip waveguide has a shorter length, but an effective refractive index changes dramatically, resulting in a relatively large insertion loss of the device.

Disadvantage 2: A wider area of the shallow-etched strip waveguide has a longer length, but the effective refractive index does not change significantly. This cannot reduce a loss obviously, but increases an overall length of the device. Prior art documents US 2006/133754 A1, WO 2014/208601 A1 and US 2008/080808 A1 disclose waveguides having a central tapered waveguide and shallow-etched strip waveguides disposed on both sides of the central tapered waveguide. Each shallow-etched strip waveguide is of a structure with a gradually changing width.

**SUMMARY**

The present invention provides a tapered waveguide according to independent claim 1 and a silicon-based chip to reduce a loss and a length of the tapered waveguide.

According to the tapered waveguide and the silicon-based chip of the present invention, a structure of a tapered waveguide is optimized by using a channel central waveguide and concave shallow-etched strip waveguides. A narrower area of the shallow-etched strip waveguide has a longer length, so that an effective refractive index changes slowly and an insertion loss of the device can be effectively reduced. In addition, a wider area of the shallow-etched strip waveguide has a shorter length. However, because the effective refractive index barely changes, the insertion loss of the device is not increased, and a length of the device is effectively reduced, thereby facilitating miniaturization of the device.

## BRIEF DESCRIPTION OF DRAWINGS

FIG. 1 is a top view of a tapered waveguide in the prior art;
FIG. 2 is a schematic diagram of a cross section of a channel waveguide, not being part of the claimed invention;
FIG. 3 is a schematic diagram of a cross section of a ridge waveguide, not being part of the claimed invention;
FIG. 4 is a schematic structural diagram of a tapered waveguide according to an embodiment of the claimed invention;
FIG. 5 is a schematic structural diagram of a tapered waveguide according to Embodiment 1 of the claimed invention;
FIG. 6 is a schematic structural diagram of a tapered waveguide according to Embodiment 2 of the claimed invention;
FIG. 7 is a schematic structural diagram of a tapered waveguide according to Embodiment 3 of the claimed invention;
FIG. 8 is a diagram of a correspondence between a width of a shallow-etched strip waveguide and an effective refractive index; and
FIG. 9 is a diagram of loss comparison between a tapered waveguide provided in the claimed invention and a waveguide in the prior art.

Reference numerals:

1: Central waveguide 2: Shallow-etched strip waveguide 3: Buried cladding
4: Base 5: Upper cladding 10: Central waveguide
20: Shallow-etched strip waveguide 21: Shallow-etched strip waveguide
22: Shallow-etched strip waveguide 23: Shallow-etched strip waveguide
30: Channel waveguide40: Ridge waveguide 50: Tapered waveguide

## DESCRIPTION OF EMBODIMENTS

The following describes the specific embodiments of the present invention in detail with reference to the accompanying drawings. It should be understood that specific implementations described herein are merely used to explain the present invention but are not intended to limit the present invention.

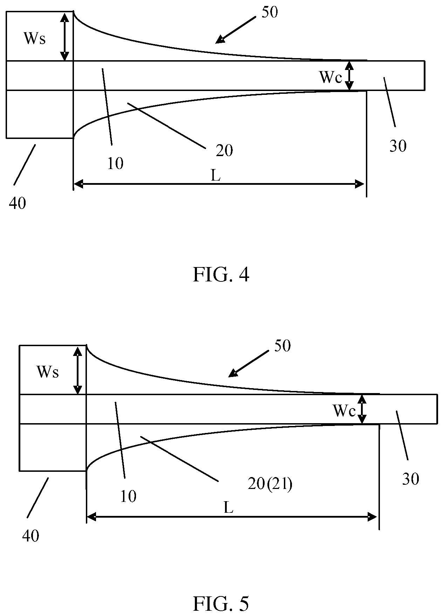

As shown in FIG. 4, FIG. 5, FIG. 6, and FIG. 7, FIG. 4 shows a tapered waveguide provided in the claimed invention, and FIG. 5, FIG. 6, and FIG. 7 show tapered waveguides of different structures provided in the embodiments. For ease of understanding, a shallow-etched strip waveguide provided in the embodiments may also be referred to as a shallow-etched waveguide, a shallow-etched strip-shaped waveguide, a shallow-etched thin-film waveguide, or a shallow-etched slab waveguide.

An embodiment of the present invention provides a tapered waveguide 50. The tapered waveguide 50 includes a central waveguide 10 and shallow-etched strip waveguides 20 disposed on both sides of the central waveguide 10. Each shallow-etched strip waveguide 20 is of a structure with a gradually changing width, and an outline, away from the central waveguide 10 and in a length direction, of the shallow-etched strip waveguide 20 is a concave arc without an abrupt change. A narrower end of the tapered waveguide is connected to a channel waveguide 30, and a wider end is connected to a ridge waveguide 40.

In this embodiment, "concave" in the foregoing "concave arc" means that the arc curves inwards towards the waveguide itself. The tapered waveguide includes the central waveguide 10 and the shallow-etched strip waveguides 20, and also includes a buried cladding bearing the central waveguide 10 and the shallow-etched strip waveguides 20, and an upper cladding enclosing the central waveguide 10 and the shallow-etched strip waveguides 20. Refractive indexes of the buried cladding and the upper cladding are lower than refractive indexes of the central waveguide 10 and the shallow-etched strip waveguides 20. In this embodiment, a refractive index refers to a property of a material, that is, changes of a refractive index for rays of a same wavelength. Specifically, the central waveguide 10 and the shallow-etched strip waveguides 20 are made of a material of a high refractive index, while the buried cladding and the upper cladding are made of a material of a low refractive index. In specific fabrication, the central waveguide 10 and the shallow-etched strip waveguides 20 may be made of silicon, silicon nitride, a polymer, or a semiconductor material. The buried cladding and the upper cladding may be made of silicon dioxide, silicon nitride, or a boron-doped, phosphorous-doped, or germanium-doped glass material. A ratio of boron, phosphorous, or germanium elements doped in the glass material may be a conventional fraction in the prior art, and no limitation is set thereto. In addition, in the fabricated tapered waveguide, a height of the central waveguide 10 is greater than that of the shallow-etched strip waveguide 20. The central waveguide 10 is located at a center line of the tapered waveguide 50. The shallow-etched strip waveguides 20 located on both sides of the central waveguide 10 are centrally symmetric.

An effective refractive index is an important and common parameter for an optical waveguide. Its value is related to a cross sectional shape of the waveguide and a refractive index of a material of the waveguide. Once the cross sectional shape and material of the waveguide are determined, the effective refractive index of the waveguide is also determined. A specific value can be obtained through calculation by using emulation software. The value of the effective refractive index is related to a mode of the waveguide, and different modes are corresponding to different effective refractive indexes. The effective refractive index mentioned in this patent refers to an effective refractive index of a tapered waveguide fundamental mode. A fundamental mode of a waveguide refers to a TE zero-order mode, TE0 for short, in the waveguide. The effective refractive index refers to an effective refractive index corresponding to a working wavelength of the tapered waveguide.

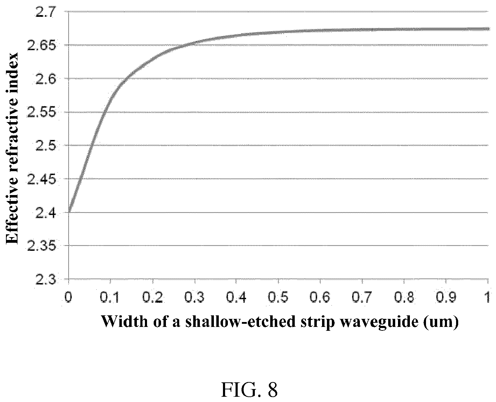

As shown in FIG. 8, FIG. 8 shows a diagram of a correspondence between a width of a shallow-etched strip waveguide and an effective refractive index. A corresponding central waveguide has a width of 0.5 $\mu$m. It can be learned from FIG. 8 that as the width of the shallow-etched strip waveguide increases, the effective refractive index changes. In addition, a smaller width of the shallow-etched strip waveguide 20 indicates a greater change of the effective refractive index. When the width of the shallow-etched strip waveguide 20 is greater than about 0.5 to 1 $\mu$m, the effective refractive index of a tapered waveguide no longer changes obviously. A loss of a tapered waveguide mainly comes from mode mismatch, surface roughness of the silicon waveguide, and an absorption loss of the waveguide when light is transmitted through the waveguide. The latter two are determined by a manufacturing process and a material of the waveguide, and are irrelevant to a structure of the tapered waveguide itself. Therefore, for the mode mismatch, the structure and a shape of the tapered waveguide can be optimized to reduce an insertion loss. Therefore, in the tapered waveguide provided in this embodiment, a structure of a shallow-etched strip waveguide 20 is optimized by using a concave shallow-etched strip waveguide. A narrower area of the shallow-etched strip waveguide has a longer length, so that an effective refractive index changes slowly and an insertion loss of the device can be effectively reduced. In addition, a wider area of the shallow-etched strip waveguide has a shorter length (that is, a length of a wider part of the shallow-etched strip waveguide is shorter than a length of a narrower part of the shallow-etched strip waveguide). However, because the effective refractive index barely changes, the insertion loss of the device is not increased, and a length of the device is effectively reduced, thereby facilitating miniaturization of the device.

In this embodiment, a function f(x) = w of the width w and a length x of the shallow-etched strip waveguide satisfies f'(x) > 0 (a second derivative of the function is greater than 0). For ease of understanding of the shallow-etched strip waveguide provided in this embodiment, its structure is described in detail below with reference to the drawings.

**Embodiment 1**

A tapered waveguide provided in this embodiment includes a central waveguide 10, shallow-etched strip waveguides 21, and a buried cladding and an upper cladding that enclose the central waveguide 10 and the shallow-etched strip waveguides 21. Materials of and a location relationship between the parts are the same as those of the tapered waveguide provided in the general embodiment, and details are not described again herein.

Now referring to FIG. 5, a variation relationship between a width of the shallow-etched strip waveguide 21 of the tapered waveguide provided in this embodiment and a length of the shallow-etched strip waveguide 21 conforms to a rule that an effective refractive index of the tapered waveguide uniformly changes with a length of the tapered waveguide.

Effective refractive indexes of a ridge waveguide 40 and a channel waveguide 30 are n1 and n2, respectively.

Because the effective refractive index uniformly changes with the length, the effective refractive index at any length x (which is calculated from an end, connected to the channel waveguide 30, of the tapered waveguide 50) can be derived: n2 + x/L * (n1 - n2). According to a variation relationship (as shown in FIG. 8, which can be derived by using emulation software) between the effective refractive index and the width of the shallow-etched strip waveguide 21, the corresponding width of the shallow-etched strip waveguide 21 can be obtained, so as to obtain line shapes, in the length direction, of the shallow-etched strip waveguides 21 of the tapered waveguide.

In general, if the relationship between the effective refractive index neff and the width w of the shallow-etched strip waveguide 21 is expressed by a function f(w) = neff, an inverse function for the effective refractive index and the width of the shallow-etched strip waveguide 21 can be calculated (through either numerical solution or analytical solution): g(neff) = w. A relationship between the width w of the shallow-etched strip waveguide 21 of the tapered waveguide and the length x of the shallow-etched strip waveguide is as follows: $h(x) = g(n2 + x/L * (n1 - n2)) = w$. The effective refractive index of the tapered waveguide changes uniformly.

As shown in FIG. 4, it is assumed that a width of the central waveguide 10 is Wc, and a width of one of the shallow-etched strip waveguides 20 on both sides are w (that is, a width of a part, on one side of the central waveguide 10, of the tapered waveguide 50, and a value of the width varies with a length of the shallow-etched strip waveguide). A total width of the tapered waveguide is Wc + w * 2, and a length of the tapered waveguide is L. Two ends of the tapered waveguide are connected to a channel waveguide 30 and a ridge waveguide 40, respectively. A width of the channel waveguide 30 is Wc, and a width of the ridge waveguide 40 is Wc + Ws * 2 (widths of shallow-etched strip waveguides on two sides are Ws, and a width of a central waveguide is Wc).

**Embodiment 2**

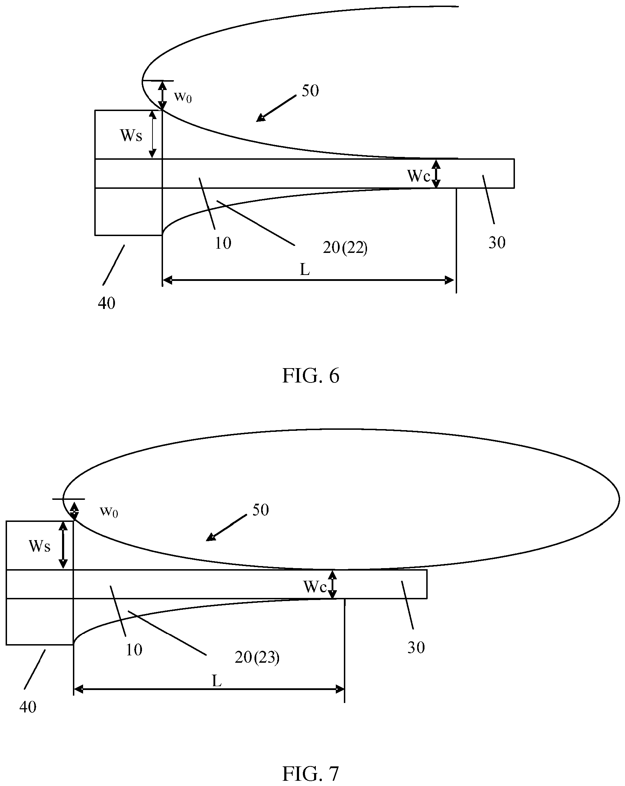

As shown in FIG. 6, materials of and a location relationship among a buried cladding, an upper cladding, a central waveguide 10, and shallow-etched strip waveguides 22 of a tapered waveguide provided in this embodiment are the same as those of the tapered waveguide provided in the general embodiment, and details are not described again herein. Compared with Embodiment 1, linearity of the shallow-etched strip waveguide 22 of the tapered waveguide provided in this embodiment is changed.

Specifically, a variation relationship between a width of the shallow-etched strip waveguide 22 and a length of the shallow-etched strip waveguide 22 satisfies a parabolic equation. FIG. 6 shows a relationship between a line shape of the tapered waveguide and a parabola. The parabolic equation is $y = ax^2$, where $a > 0$ and $w_0 \geq 0$. A relationship between the width w of the shallow-etched strip waveguide 22 and the length x of the shallow-etched strip waveguide can be obtained as follows:

$$w = \sqrt{w_0^2 + \frac{W_s^2 + 2w_0 \cdot W_s}{L} \cdot x} - w_0 \quad ;$$

where L is a total length of the tapered waveguide 50, Ws is a maximum width (which is equal to a width of one of shallow-etched strip waveguides on both sides of a ridge waveguide connected to the shallow-etched strip waveguide 22) of the shallow-etched strip waveguide 22 of the tapered waveguide, and $w_0$ is a vertical distance from a wider end of the tapered waveguide 50 to a center line of a parabola of an outline of the shallow-etched strip waveguide 22.

**Embodiment 3**

As shown in FIG. 7, materials of and a location relationship among a buried cladding, an upper cladding, a central waveguide 10, and shallow-etched strip waveguides 23 of a tapered waveguide provided in this embodiment are the same as those of the tapered waveguide provided in the general embodiment, and details are not described again herein. Compared with Embodiment 1, a line shape of the shallow-etched strip waveguide 23 of the tapered waveguide provided in this embodiment is changed.

Specifically, a variation relationship between a width of the shallow-etched strip waveguide 23 and a length of the shallow-etched strip waveguide satisfies an elliptic equation. FIG. 7 shows a relationship between a line shape of the tapered waveguide and an ellipse. The elliptic equation is x2/a2 + y2/b2 = 0, where $a > 0$, $b > 0$, and $w_0 \geq 0$. A relationship between the width w of the shallow-etched strip waveguide 23 and the length x of the shallow-etched strip waveguide can be obtained as follows:

$$w = W_s + w_0 - \frac{W_s + w_0}{L} \sqrt{L^2 - \frac{W_s^2 + 2w_0 \cdot W_s}{W_s^2 + 2w_0 \cdot W_s + w_0^2} \cdot x^2} \quad ,$$

where L is a total length of the tapered waveguide 50, Ws is a maximum width (which is equal to a width of one of shallow-etched strip waveguides on both sides of a ridge waveguide connected to the shallow-etched strip waveguide 23) of the shallow-etched strip waveguide 23, and $w_0$ is a vertical distance from a wider end of the tapered waveguide 50 to a major axis of an ellipse of an outline of the shallow-etched strip waveguide 23.

As can be learned from the foregoing specific embodiments, line shapes of a shallow-etched strip waveguide of the tapered waveguide provided in the embodiments may be different concave arcs. Specific line shapes are not limited to the line shapes provided in Embodiment 1, Embodiment 2, and Embodiment 3, and other shapes may also be used.

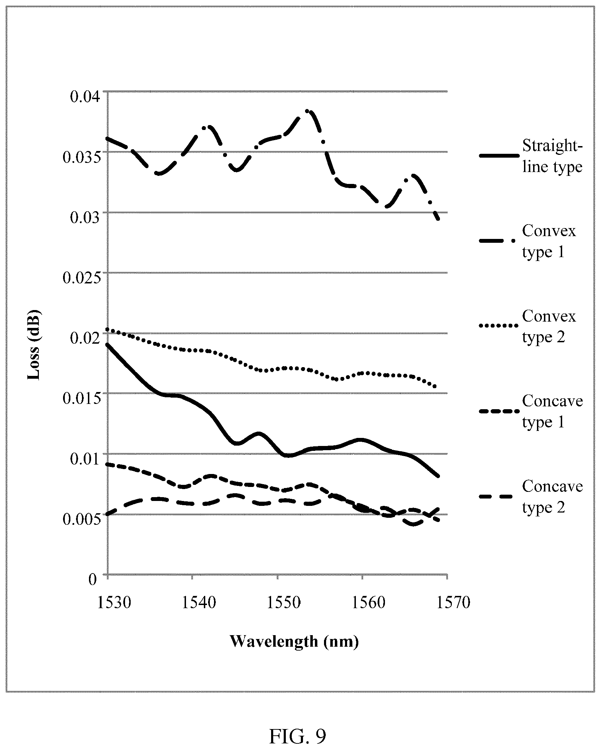

For better understanding of the effect of the tapered waveguide provided in this embodiment, insertion losses of tapered waveguides of three different linear structures are compared through experiments in this embodiment. Results are shown in FIG. 9. A straight-line type is a structure used by a tapered waveguide in the prior art. A concave type is a structure of a tapered waveguide provided according to the present invention. A difference in concave type 1 and concave type 2 is used concave line shapes. It should be noted that the concave line shapes are not corresponding to that of Embodiment 1 and Embodiment 2. A convex type is a structure similar to that of the tapered waveguide provided in this embodiment. A difference lies in that a line shape of the shallow-etched strip waveguide is an outwardly-protruding shape, and a difference in convex type 1 and convex type 2 is convex arcs. As can be learned from the comparison of the experiment results of the straight-line type, concave type 1, concave type 2, convex type 1, and convex type 2, a loss of a tapered waveguide with the concave type is generally smaller than that of a tapered waveguide with the straight-line type, and a loss of a tapered waveguide with the convex type is the largest. This is the same as the foregoing analysis result. For tapered waveguides with a same length, a loss can be greatly reduced by using a concave structure. Therefore, the tapered waveguide provided in this embodiment can significantly reduce an insertion loss and a length of the device, and increase chip integration. In addition, the device of the tapered waveguide provided in this embodiment has a simple structure, is compatible with a CMOS technology, is easy to integrate, and has a relatively low process requirement and a relatively high tolerance to process errors.

An embodiment of the present invention further provides a silicon-based chip, where the silicon-based chip includes the tapered waveguide according to any one of the foregoing embodiments.

The silicon-based chip provided in this embodiment includes any one of the foregoing tapered waveguides, and has the structure and the effect of the foregoing tapered waveguides. That is, a channel central waveguide and concave shallow-etched strip waveguides are used. A narrower area of the shallow-etched strip waveguide has a longer length, so that an effective refractive index changes slowly and an insertion loss of the device can be effectively reduced. In addition, a wider area of the shallow-etched strip waveguide has a shorter length. However, because the effective refractive index barely changes, the insertion loss of the device is not increased, and a length of the device is effectively reduced, thereby facilitating miniaturization of the device.

Obviously, a person skilled in the art can make various modifications and variations to the present invention without departing from the scope of the present invention.

## Claims

1. A tapered waveguide, comprising a central waveguide (10) having a constant width (Wc) and shallow-etched strip waveguides (20) disposed on both sides of the central waveguide (10), wherein each shallow-etched strip waveguide (20) is of a structure with a gradually changing width, and an outline of a side, away from the central waveguide (10) and in a length direction, of the shallow-etched strip waveguide (20) is a concave arc.

2. The tapered waveguide according to claim 1, wherein a variation relationship between a width of the shallow-etched strip waveguide (20) and a length of the shallow-etched strip waveguide (20) conforms to a rule that an effective refractive index of the tapered waveguide uniformly changes with a length of the tapered waveguide.

3. The tapered waveguide according to claim 1, wherein a variation relationship between a width of the shallow-etched strip waveguide (20) and a length of the shallow-etched strip waveguide (20) satisfies a parabolic equation.

4. The tapered waveguide according to claim 1, wherein a variation relationship between a width of the shallow-etched strip waveguide (20) and a length of the shallow-etched strip waveguide (20) satisfies an elliptic equation.

5. The tapered waveguide according to any one of claims 1 to 4, further comprising a buried cladding bearing the central waveguide (10) and the shallow-etched strip waveguides (20), and an upper cladding enclosing the central waveguide and the shallow-etched strip waveguides, wherein refractive indexes of the buried cladding and the upper cladding are lower than refractive indexes of the central waveguide (10) and the shallow-etched strip waveguides (20).

6. The tapered waveguide according to claim 5, wherein the central waveguide (10) and the shallow-etched strip waveguides (20) are made of silicon, silicon nitride, a polymer, or a semiconductor material.

7. The tapered waveguide according to claim 5, wherein the buried cladding and the upper cladding are made of silicon dioxide, silicon nitride, or a boron-doped, phosphorous-doped, or germanium-doped glass material.

8. The tapered waveguide according to claim 5, wherein a height of the central waveguide (10) is greater than that of the shallow-etched strip waveguide (20).

9. A silicon-based chip, comprising the tapered waveguide according to any one of claims 1 to 8.

**Patentansprüche**

1. Verjüngter Wellenleiter, der einen zentralen Wellenleiter (10), der eine konstanten Breite (Wc) aufweist, und flach geätzte Streifenwellenleiter (20), die auf beiden Seiten des zentralen Wellenleiters (10) angeordnet sind, umfasst, wobei jeder flach geätzte Streifenwellenleiter (20) aus einer Struktur mit einer sich allmählich ändernden Breite gemacht ist und ein Umriss einer Seite, weg von dem zentralen Wellenleiter (10) und in einer Längsrichtung, des flachgeätzten Streifenwellenleiters (20) ein konkaver Bogen ist.

2. Verjüngter Wellenleiter nach Anspruch 1, wobei eine Variationsbeziehung zwischen einer Breite des flachgeätzten Streifenwellenleiters (20) und einer Länge des flach geätzten Streifenwellenleiters (20) einer Regel entspricht, dass eine effektive Brechzahl des verjüngten Wellenleiters sich mit einer Länge des verjüngten Wellenleiters gleichmäßig ändert.

3. Verjüngter Wellenleiter nach Anspruch 1, wobei eine Variationsbeziehung zwischen einer Breite des flachgeätzten Streifenwellenleiters (20) und einer Länge des flachgeätzten Streifenwellenleiters (20) eine parabolische Gleichung erfüllt.

4. Verjüngter Wellenleiter nach Anspruch 1, wobei eine Variationsbeziehung zwischen einer Breite des flachgeätzten Streifenwellenleiters (20) und einer Länge des flachgeätzten Streifenwellenleiters (20) eine elliptische Gleichung erfüllt.

5. Verjüngter Wellenleiter nach einem der Ansprüche 1 bis 4, der ferner einen vergrabenen Mantel, der den zentralen Wellenleiter (10) und die flach geätzten Streifenwellenleiter (20) trägt, und einen oberen Mantel, der den zentralen Wellenleiter und den flachgeätzten Streifenwellenleiter umschließt, umfasst, wobei die Brechzahlen des vergrabenen Mantels und des oberen Mantels niedriger als die Brechzahlen des zentralen Wellenleiters (10) und der flachgeätzten Streifenwellenleiter (20) sind.

6. Verjüngter Wellenleiter nach Anspruch 5, wobei der zentrale Wellenleiter (10) und die flachgeätzten Streifenwellenleiter (20) aus Silicium, Siliciumnitrid, einem Polymer oder einem Halbleitermaterial hergestellt sind.

7. Verjüngter Wellenleiter nach Anspruch 5, wobei der vergrabene Mantel und der obere Mantel aus Siliciumdioxid, Siliciumnitrid oder einem bordotierten, phosphordotierten oder germaniumdotierten Glasmaterial hergestellt sind.

8. Verjüngter Wellenleiter nach Anspruch 5, wobei eine Höhe des zentralen Wellenleiters (10) über der des flachgeätzten Streifenwellenleiters (20) liegt.

9. Chip auf Siliciumbasis, der den verjüngten Wellenleiter nach einem der Ansprüche 1 bis 8 umfasst.

**Revendications**

1. Guide d'ondes à impédance croissante, comprenant un guide d'ondes central (10) ayant une largeur constante (Wc) et des guides d'ondes à bande peu profonde (20) disposés des deux côtés du guide d'ondes central (10), dans lequel chaque guide d'ondes à bande peu profonde (20) est d'une structure avec une largeur changeant progressivement, et un contour d'un côté, éloigné du guide d'ondes central (10) et dans une direction de longueur, du guide d'ondes à bande peu profonde (20) est un arc concave.

2. Guide d'ondes à impédance croissante selon la revendication 1, dans lequel une relation de variation entre une largeur du guide d'ondes à bande peu profonde (20) et une longueur du guide d'ondes à bande peu profonde (20) est conforme à une règle selon laquelle un indice de réfraction effectif du guide d'ondes à impédance croissante change uniformément avec une longueur du guide à impédance croissante.

3. Guide d'ondes à impédance croissante selon la revendication 1, dans lequel une relation de variation entre une largeur du guide d'ondes à bande peu profonde (20) et une longueur du guide d'ondes à bande peu profonde (20) satisfait une équation parabolique.

4. Guide d'ondes à impédance croissante selon la revendication 1, dans lequel une relation de variation entre une largeur du guide d'ondes à bande peu profonde (20) et une longueur du guide d'ondes à bande peu profonde (20) satisfait une équation elliptique.

5. Guide d'ondes à impédance croissante selon l'une quelconque des revendications 1 à 4, comprenant en outre une gaine enterrée portant le guide d'ondes central (10) et les guides d'ondes à bande peu profonde (20), et une gaine supérieure renfermant le guide d'ondes central et les guides d'ondes à bande peu profonde, dans lequel les indices de réfraction de la gaine enterrée et de la gaine supérieure sont inférieurs aux indices de réfraction du guide d'ondes central (10) et des guides d'ondes à bande peu profonds (20).

6. Guide d'ondes à impédance croissante selon la revendication 5, dans lequel le guide d'ondes central (10) et les guides d'ondes à bande peu profonde (20) sont constituées de silicium, de nitrure de silicium, d'un polymère ou d'un matériau semi-conducteur.

7. Guide d'ondes à impédance croissante selon la revendication 5, dans lequel la gaine enterrée et la gaine supérieure sont constituées de dioxyde de silicium, de nitrure de silicium ou d'un matériau en verre dopé au bore, au phosphore ou au germanium.

8. Guide d'ondes à impédance croissante selon la revendication 5, dans lequel une hauteur du guide d'ondes central (10) est supérieure à celle du guide d'ondes à bande peu profonde (20).

9. Puce à base de silicium, comprenant le guide d'ondes à impédance croissante selon l'une quelconque des revendications 1 à 8.

FIG. 1

FIG. 2

FIG. 3

FIG. 4

FIG. 5

FIG. 6

FIG. 7

FIG. 8

FIG. 9

**EP 3 287 821 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006133754 A1
- WO 2014208601 A1
- US 2008080808 A1